# EUROPÄISCHE PATENTSCHRIFT

(11) **EP 3 058 805 B1**
(45) Veröffentlichungstag und Bekanntmachung des Hinweises auf die Patenterteilung: **12.12.2018**
(21) Anmeldenummer: 16151181.1
(22) Anmeldetag: 14.01.2016
(51) Int. Cl.: A01D 89/00, A01D 78/00, A01D 78/02, A01D 78/08

(54) **HEUWERBUNGSMASCHINE**
HAY BALER
FANEUSE

(30) Priorität: 20.02.2015 DE 102015002209
(43) Veröffentlichungstag der Anmeldung: 24.08.2016
(73) Patentinhaber: PÖTTINGER Landtechnik GmbH, 4710 Grieskirchen (AT)
(72) Erfinder: Lehner, Josef, 4732 St. Thomas (AT)
(74) Vertreter: Thoma, Michael

(56) Entgegenhaltungen:
- WO-A1-2014/187618
- GB-A- 743 569
- GB-A- 1 095 874

## Beschreibung

Die vorliegende Erfindung betrifft eine Heuwerbungsmaschine in Form eines Mergers zum Schwaden und/oder Querversetzen von Erntegut, mit zumindest einer Mergereinheit, die einen Aufsammelförderer zum Aufsammeln des Ernteguts vom Boden und einen Querförderer zum Querfördern des aufgesammelten Ernteguts quer zur Fahrtrichtung umfasst.
Solche Merger sind üblicherweise an einen Schlepper anbaubare Anbaugeräte, die halm- und/oder blattförmiges Erntegut wie beispielsweise geschnittenes Gras, Heu oder Stroh vom Boden aufsammeln und in Schwaden ablegen können. Anders als bei Rechkreiselschwadern wird dabei das Erntegut nicht direkt auf dem Boden liegend zu einem Schwad zusammengerecht, sondern zunächst vom Boden aufgesammelt und erst sodann quergefördert, um in einem Schwad abgelegt zu werden. Solche Merger zeichnen sich durch eine hohe Futter- bzw. Erntegutqualität aus, da Verunreinigungen wie Steine oder Erdklumpen weniger leicht in den Schwad gelangen, wenn das Erntegut vor dem Querfördern zunächst vom Boden angehoben wird.
Der Aufsammelförderer kann dabei ein Zinkenförderer mit umlaufend antreibbaren Förderzinken sein, insbesondere in Form einer sog. Pickup, bei der Förderzinken zwischen Abstreiferblechen hervorstehen und auf ringförmigen Umlaufbahnen in aufrechten Umlaufebenen angetrieben werden. Der Querförderer solcher Merger ist hingegen üblicherweise als Umlaufförderer mit einem endlos umlaufenden Förderband ausgebildet, vgl. beispielsweise DE 10 2010 010 862 A1. Anstelle eines endlos umlaufenden Förderbands kann auch ein Förderboden vorgesehen sein, über den separate Förderwerkzeuge in Querförderrichtung hinwegstreichen, vgl. EP 0 255 458.

Ferner sind aus den Schriften WO 2014/187618 A1, GB 1095874 B und GB 743569 A Geräte bekannt, bei denen der Querförderer als Schneckenförderer ausgebildet ist.
Solche bislang bekannten Merger sind jedoch in verschiedener Hinsicht nachteilig. Zum einen sind die Mergereinheiten recht sperrig und platzgreifend, da für ausreichende Fördermengen das Querförderband ausreichend breit und damit die Mergereinheit in Fahrtrichtung recht tief ausgebildet werden muß. Gleichzeitig ist bislang der Tragrahmen zur Lagerung des Querförderers um den Querförderer herumgeführt, um den Futterstrom auf dem Förderband nicht zu behindern, was zu einer sperrigen Baugröße weiter beiträgt.

Zum anderen ist die Abwurfhöhe solcher Merger bislang recht niedrig, wodurch die Schwadablage bisweilen beeinträchtigt werden kann, wenn das Erntegut unmittelbar am Ende des Querförderers abgelegt wird und der Schwad durch den noch vorbeistreifenden Querförderer teilweise mitgerissen und hierdurch sozusagen zerzaust wird.

Der vorliegenden Erfindung liegt hiervon ausgehend die Aufgabe zugrunde, eine verbesserte Heuwerbungsmaschine der genannten Art zu schaffen, die Nachteile des Standes der Technik vermeidet und Letzteren in vorteilhafter Weise weiterbildet. Insbesondere soll eine kompakte, kleinbauende und dennoch wartungsfreundliche Mergereinheit geschaffen werden, die hinsichtlich der Abwurfhöhe des Schwads variabler gestaltet werden kann und hierdurch eine verbesserte Schwadablage erzielt.

Erfindungsgemäß wird die genannte Aufgabe durch eine Heuwerbungsmaschine gemäß Anspruch 1 gelöst. Bevorzugte Ausgestaltungen der Erfindung sind Gegenstand der abhängigen Ansprüche.

Es wird also vorgeschlagen, als Querförderer kein Förderband und auch keinen Fördertisch mit darüberstreichenden Förderorganen zu verwenden, sondern einen Schneckenförderer. Erfindungsgemäß ist der Querförderer als Schneckenförderer mit einer um eine liegende, quer zur Fahrtrichtung ausgerichtete Drehachse rotierend antreibbaren Förderschnecke ausgebildet. Ein solcher Schneckenförderer kann im Vergleich zu einem Bandförderer deutlich kleiner bauen und kompakter ausgebildet sein und dabei dennoch das notwendige Erntegutvolumen bewältigen. Zum anderen ist der Schneckenförderer hinsichtlich der Übergabe des Ernteguts vom Aufsammelförderer her deutlich unkritischer, insbesondere braucht der Aufsammelförderer - was gleichwohl möglich wäre - das Erntegut nicht von oben her auf den Querförderer ablegen, wie dies bei einem Förderband notwendig ist, so dass ein Querförderer in Form eines Schneckenförderers hinsichtlich seiner Abwurfhöhe deutlich flexibler positionierbar ist. Insbesondere kann die Baulänge in Fahrtrichtung reduziert und damit die Mergereinheit näher am Schlepper positioniert werden.

In Weiterbildung der Erfindung ist die genannte Förderschnecke von einem Schneckengehäuse eingefasst, das die Förderschnecke umfangsseitig über ein Segment von zumindest π/4 umgeben kann, so dass zwischen dem Schneckengehäuse und der Förderschnecke ein Förderraum gebildet wird, durch den das Erntegut unter Drehung der Förderschnecke axial gefördert wird. Vorteilhafterweise kann sich das Schneckengehäuse dabei zumindest an einer Unterseite der Schnecke und einer in Fahrtrichtung betrachtet Hinterseite der Schnecke erstrecken und/oder einen Boden und eine Rückwand bilden, die das Herausfallen des Ernteguts verhindert. Das Schneckengehäuse kann sich aber auch um einen größeren Umfangssektor um die Förderschnecke herum erstrecken, beispielsweise über einen Sektor von π/2 oder mehr oder auch einen Sektor von π oder größer.

Vorteilhafterweise kann das genannte Schneckengehäuse mit einem Bodenabschnitt bis unter einen Ablagebereich des Aufsammelförderers geführt sein und/oder eine an den Aufsammelförderer angrenzende und/oder angeschlossene Sammelwanne bilden. Durch eine solche wannenförmige Ausbildung des Schneckengehäuses kann sichergestellt werden, dass das vom Aufsammelförderer abgelegte Erntegut vollständig vom Schneckenförderer erfasst wird.

Vorteilhafterweise kann die Mergereinheit an dem Schneckengehäuse aufgehängt bzw. gelagert sein, das gleichzeitig ein Chassis bilden kann, an dem auch der Aufsammelförderer gelagert sein kann. Dabei kann sich das genannte Schneckengehäuse um die Förderschnecke herum erstrecken, so daß ein oberhalb der Förderschnecke liegender Gehäuse- bzw. Chassisabschnitt als Lagerabschnitt dienen kann, an dem die Mergereinheit gelagert bzw. aufgehängt sein kann. Gleichwohl ist es alternativ oder zusätzlich ebenfalls möglich, die Mergereinheit an einem anderen Schneckengehäuseabschnitt oder auch einem anderen Strukturteil des Querförderers und/oder Aufsammelförderers zu lagern.

Um eine ausreichende Abwurfhöhe zu erzielen, die ein von der Mergereinheit ausreichend weit beabstandetes und lockeres Ablegen des Erntegutschwads ermöglicht, kann in Weiterbildung der Erfindung der Schneckenförderer mit einer Oberseite der Förderschnecke oberhalb des Aufsammelförderers angeordnet sein. Der Schneckenförderer ist, insbesondere in Verbindung mit dem zuvor genannten Schneckengehäuse, hinsichtlich der Erntegutübergabe vom Aufsammelförderer her unproblematisch und ermöglicht eine gegenüber dem Aufsammelförderer nach oben geschobene Anordnung.

Insbesondere kann der Schneckenförderer auch mit der Drehachse seiner Förderwalze über dem Ablegebereich des Aufsammelförderers angeordnet sein. Insbesondere kann der Schneckenförderer eine Abwurfhöhe besitzen, die oberhalb des Ablagebereichs des Aufsammelförderers liegt, d.h. das Erntegut wird vom Aufsammelförderer her kommend durch den Schneckenförderer noch ein Stück nach oben gefördert, bevor es abgelegt wird.

Vorteilhafterweise kann der Schneckenförderer trotz der genannten Höhenpositionierung unmittelbar mit dem Aufsammelförderer zusammenarbeiten bzw. unmittelbar dem Aufsammelförderer ohne Zwischenschaltung weiterer Übergabeförderer nachgeordnet sein, ohne dass hierdurch die Übergabe des Ernteguts vom Aufsammelförderer auf den Schneckenförderer beeinträchtigt wäre. Hierdurch kann eine besonderes kompakte Anordnung und Bauweise der Mergereinheit erzielt werden.

Gemäß der Erfindung ist der Schneckenförderer auch relativ zum Aufsammelförderer höhenverstellbar ausgebildet sein, um verschiedene Abwurfhöhen einstellen zu können. Dies kann durch händische Verstellung erfolgen. Alternativ kann eine entsprechend ausgebildete Höheneinstellvorrichtung auch fremdenergiebetätigbar ausgebildet sein.

In Weiterbildung der Erfindung kann die zumindest eine Mergereinheit dabei an einem Anbaurahmen aufgehängt sein, der am Schlepper anhebbar und absenkbar angebaut werden kann, so dass die Mergereinheit durch Anheben des Anbaurahmens vom Boden aushebbar ist. Der Anbaurahmen kann hierbei durch eine geeignete Anbauvorrichtung wie beispielsweise einen Anbaubock und/oder eine Dreipunktanlenkung am Schlepper angelenkt sein, so dass der Anbaurahmen und damit die daran angelenkte Mergereinheit allein vom Schlepper frei auskragend gehalten werden kann, wenn der Anbaurahmen entsprechend angehoben ist.

Insbesondere kann der genannte Anbaurahmen fahrwerkslos ausgebildet sein. Durch das Weglassen eines Geräterahmenfahrwerks, das an Aufsattelgeräten vorgesehen ist, können die Kosten beträchtlich gesenkt werden. Zum anderen können negative Fahreigenschaften wie Kurvenschneiden und direkte Stöße auf die Mergereinheiten durch Überfahren von Bodenunebenheiten vermieden werden. Die Mergereinheit kann von dem genannten Anbaurahmen schwebend über den Boden geführt werden, was auch für die abgesenkte Arbeitsstellung gelten kann. Gleichwohl kann die Mergereinheit durch ein eigenes Tastfahrwerke, das an der Mergereinheit selbst angebracht sein kann, am Boden abgestützt sein bzw. den Boden abtasten, um eine bessere Bodenanpassung zu erzielen. Beispielsweise können solche Tastfahrwerke in Form von Tasträdern, Gleitkufen oder Gleittellern unter dem Querförderer oder auch hinter oder neben dem Querförderer oder Aufsammelförderer angeordnet sein.

Um eine gute Bodenanpassung zu ermöglichen, kann die genannte Mergereinheit vorteilhafterweise pendelnd an dem front- bzw. heckseitigen Anbaurahmen aufgehängt sein, wobei die pendelnde Aufhängung zumindest eine liegende Pendelachse umfassen kann, die sich vorzugsweise etwa in Fahrtrichtung erstrecken kann. Hierdurch kann die Mergereinheit einschließlich Aufsammelförderer und Querförderer Längswellen in der Bodenkontur oder seitlich abschüssigen Hangflanken bzw. Geländekonturen folgen. Alternativ oder zusätzlich zu einer solchen sich zumindest näherungsweise in Fahrtrichtung erstreckenden Pendelachse kann die pendelnde Aufhängung der Mergereinheit auch eine liegende Pendelachse quer zur Fahrtrichtung umfassen, so dass sich die Mergereinheit Querwellen quer zur Fahrtrichtung anpassen kann.

Um eine leichtfüßige Bodenanpassung zu erzielen und ein zu hartes Aufsetzen oder gar ein Einstechen in den Boden zu vermeiden, kann die Mergereinheit gewichtsentlastet aufgehängt sein, beispielsweise an zumindest einem Tragarm, der um eine liegende Tragarmschwenkachse auf- und niederwippbar an einem Anbaurahmenteil gelagert sein kann und durch eine Gewichtsentlastungseinrichtung entgegen der Gewichtskraft der Mergereinheit entlastet oder vorgespannt ist. Die genannte Gewichtsentlastungseinrichtung kann hierbei beispielsweise eine Federeinrichtung wie eine mechanische Feder aufweisen. Alternativ oder zusätzlich kann die Gewichtsentlastungseinrichtung auch einen Druckmittelzylinder oder einen durch ein Druckmittel betätigbaren Stellaktor aufweisen, der bei entsprechender Druckbeaufschlagung beispielsweise aus einem Druckspeicher die gewünschte Gewichtsentlastung bewirken kann. Die genannte Gewichtsentlastungseinrichtung kann hierbei an dem genannten Tragarm oder auch direkt an der Mergereinheit bzw. einem damit verbundenen Anlenkstück angreifen und andererseits am genannten Anbaurahmen angelenkt sein.

Die Heuwerbungsmaschine kann dabei auch mehrere Mergereinheiten umfassen, die auf die Frontseite und die Heckseite des Schleppers aufgeteilt sein können, so dass die Mergereinheiten ohne gegenseitige Behinderung und Kollisionsproblematik noch variabler positioniert werden können. Dabei kann zumindest ein Frontmerger in der Fahrspur des Schleppers positionierbar und zumindest ein Heckmerger quer zur Fahrtrichtung zum Frontmerger versetzt positionierbar angeordnet sein. Durch den zumindest einen in der Fahrspur des Schleppers laufenden Frontmerger kann das Erntegut vor einem Überfahren durch den Schlepper bewahrt werden, so dass eine schonende Futterverarbeitung ermöglicht ist. Zum anderen kann der Versatz des Heckmergers zum Frontmerger aufgrund der Anordnung an verschiedenen Schlepperenden, d.h. Front und Heck, einfach und ohne Kollisionsproblematik zwischen den Mergereinheiten für die jeweilige Schwadaufgabe passend gewählt werden.

Die Erfindung wird nachfolgend anhand bevorzugter Ausführungsbeispiele und zugehöriger Zeichnungen näher erläutert. In den Zeichnungen zeigen:
- Fig. 1:: eine schematische Draufsicht auf eine Heuwerbungsmaschine nach einer vorteilhaften Ausführung der Erfindung mit Front- und Heckmergern, die jeweils einen Aufsammelförderer in Form einer Pick-Up mit umlaufenden Förderzinken oder -stacheln und einen daran anschließenden Querförderer in Form eines Schneckenförderers aufweisen,
- Fig. 2:: eine Frontansicht einer Mergereinheit der Heuwerbungsmaschine aus Fig. 1, die den Aufsammelförderer und den nachgeordneten Querförderer in Form des Schneckenförderers zeigt, wobei der Schneckenförderer oberhalb des Aufsammelförderers angeordnet gezeigt ist,
- Fig. 3:: eine Schnittansicht der Mergereinheit entlang der Linie A-A in Fig. 2, die die Anordnung von Schneckenförderer und Aufsammelförderer relativ zueinander und die Anbindung des Schneckengehäuses an den Aufsammelförderer zeigt,
- Fig. 4:: eine Frontansicht der Mergereinheit ähnlich Fig. 2, wobei der Schneckenförderer in einer niedrigeren Höhenstellung etwa auf Höhe des Aufsammelförderers gezeigt ist, und
- Fig. 5:: eine Schnittansicht der Mergereinheit entlang der Linie A-A in Fig. 4, die die Anordnung von Schneckenförderer und Aufsammelförderer relativ zueinander und die Anbindung des Schneckengehäuses an den Aufsammelförderer zeigt,

Wie die Figuren zeigen, kann die Heuwerbungsmaschine 1 als Anbaugerät ausgebildet sein, das an einen Schlepper 2 anbaubar ist. Die Heuwerbungsmaschine 1 kann dabei mehrere Mergereinheiten 3 umfassen, die jeweils einen Aufsammelförderer 4, der am Boden liegendes Erntegut aufsammelt und an einen Querförderer 5 übergibt, der das aufgesammelte Erntegut quer zur Fahrtrichtung 6 fördert und in Schwaden 7 wieder am Boden ablegt.

Die genannten Mergereinheiten 3 sind dabei insgesamt betrachtet liegend ausgerichtet und erstrecken sich mit ihrer länglichen Kontur quer zur genannten Fahrtrichtung 6. Der genannte Aufsammelförderer 4 kann dabei einen Stachelrotor umfassen, der um eine liegende Querachse rotatorisch antreibbar ist, wobei die Stacheln entlang der Umlaufbahn gesteuert oder auch ungesteuert sein können, wie dies bei Pickups an sich bekannt ist.

Der dem genannten Aufsammelförderer 4 nachlaufende Querförderer 5 ist als Schneckenförderer ausgebildet und besitzt eine Querförderschnecke 15, die das aufgesammelte Erntegut querfördert und in einem Schwad ablegt.

Die genannte Förderschnecke 15 ist dabei liegend quer zur Fahrtrichtung 6 ausgerichtet und ist um die entsprechend ausgerichtete Schneckendrehachse 16 rotatorisch antreibbar. Ein nicht eigens dargestellter Drehantrieb kann beispielsweise einen Elektromotor umfassen oder durch einen Antriebsstrang an eine Schlepperzapfwelle anschließbar sein.

Die Förderschnecke 15 ist dabei vorteilhafterweise unmittelbar stromab des Förderwegs des Aufsammelförderers 4 angeordnet, so dass das Erntegut vom Aufsammelförderer 4 direkt an den Schneckenförderer übergeben werden kann, ohne dass zusätzliche Übergabeförderer zwischengeschaltet werden müssten. Die Förderschnecke 15 kann hierbei parallel zur Längserstreckungsachse des Aufsammelförderers 4, beispielsweise parallel zu dessen Stachelwalzenachse angeordnet sein.

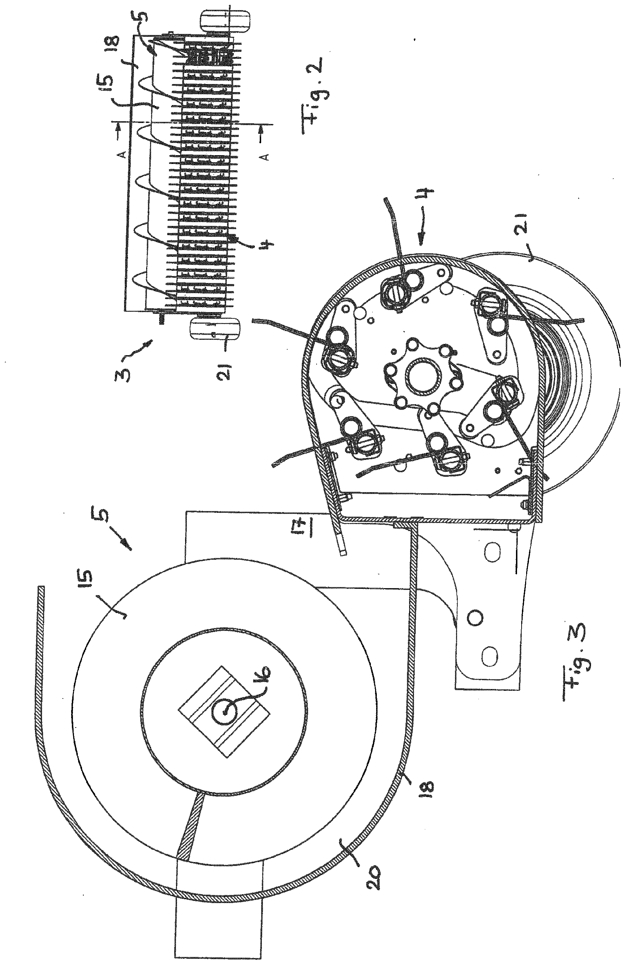

Wie die Figuren 2 und 3 zeigen, kann die Förderschnecke 15 hierbei oberhalb des Aufsammelförderers 4 angeordnet sein, wobei beispielsweise ein unteres Drittel der Förderschnecke 15 im Höhenbereich des Ablagebereichs 17 des Aufsammelförderers angeordnet sein kann. Die Schneckendrehachse 16 kann oberhalb der Oberseite des Aufsammelförderers 4 liegen, vgl. Fig. 3.

Vorteilhafterweise ist die Förderschnecke 15 des Schneckenförderers von einem Schneckengehäuse 18 umfangsseitig eingefasst, so dass zwischen dem Schneckengehäuse 18 und der Förderschnecke 15 ein umfangsseitig geschlossener Förderraum geschaffen ist. Das Schneckengehäuse 18 kann hierbei insbesondere eine Unterseite und eine vom Aufsammelförderer 4 abgewandte Rückseite und ggf. auch eine Oberseite der Förderschnecke 15 einfassen, während die dem Aufsammelförderer 4 zugewandte Vorderseite der Förderschnecke 15 offen bleibt, vgl. Fig. 3.

Das Schneckengehäuse 18 kann hierbei eine an den Aufsammelförderer 4 angeschlossene Sammelwanne bilden, die den Ablagebereich 17 des Aufsammelförderers 4 untergreift.

Insbesondere kann das Schneckengehäuse 18 ein Chassis bilden, an dem der Schneckenförderer und der Aufsammelförderer 4 gelagert sind und an dem die gesamte Mergereinheit aufgehängt sein kann, wobei die Aufhängung beispielsweise an dem Schneckengehäuseabschnitt oberhalb der Förderschnecke 15 erfolgen kann.

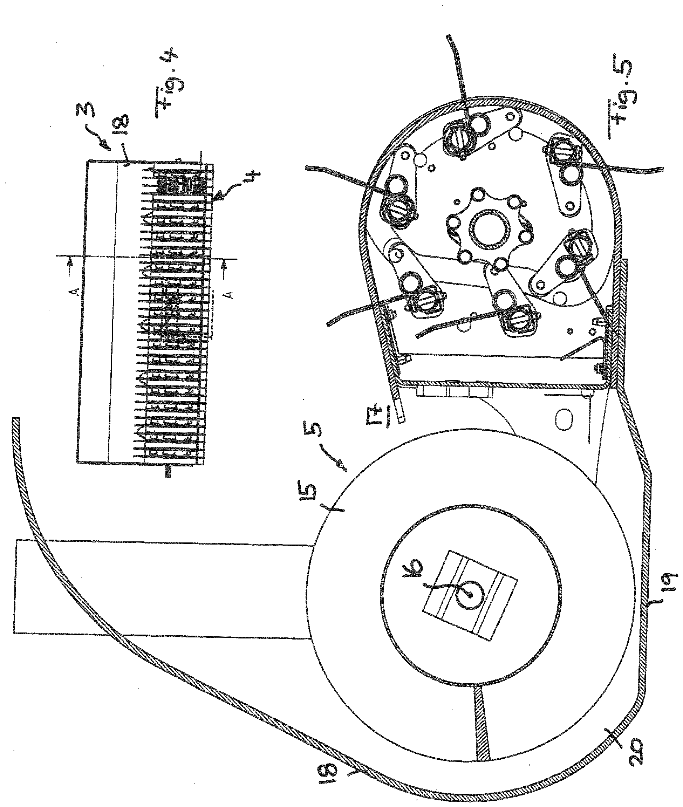

Wie die Figuren 4 und 5 im Vergleich zu den Figuren 2 und 3 zeigen, kann die Förderschnecke 15 auch tiefer angeordnet sein, insbesondere etwa auf Höhe des Aufsammelförderers 4. Wie insbesondere Fig. 5 zeigt, kann die Schneckendrehachse 16 beispielsweise auf etwa derselben Höhe wie die zentrale Längsachse des Aufsammelförderers angeordnet sein. Hierbei kann das Schneckengehäuse 18 wiederum in der zuvor genannten Weise eine den Ablagebereich 17 des Aufsammelförderers 4 untergreifende Sammelwanne bilden und als Chassis fungieren, an dem der Aufsammelförderer 4 befestigt werden und die Mergereinheit insgesamt aufgehängt werden kann.

Vorteilhafterweise kann bei einer solchen Ausbildung das Schneckengehäuse 18 mit seiner Bodenseite einen Gleitteller und/oder eine Gleitkufe 19 bilden, der als Bodentaster fungiert.

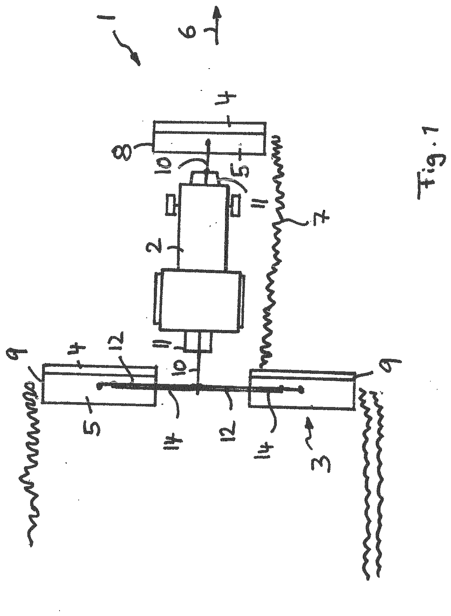

Wie Figur 1 zeigt, können die vorgenannten Mergereinheiten 3 dabei in Frontmerger 8 und Heckmerger 9 aufgeteilt sein, die einerseits am Bug bzw. an der Front des Schleppers 2 angebaut und andererseits am Heck des Schleppers 2 angebaut werden können.

Zum Anbau an den Schlepper 3 sind hierbei Anbaurahmen 10 vorgesehen, die einerseits am Heck und andererseits an der Front des Schleppers 2 angebaut werden können, und zwar vorteilhafterweise mittels einer Anbauvorrichtung 11, die den Anbaurahmen 10 frei auskragend halten bzw. anheben und absenken kann, um die an dem Anbaurahmen 10 gelagerten Mergereinheiten 3 vom Boden ausheben oder schwebend über den Boden führen kann. Die genannte Anbauvorrichtung 11 kann hierbei vorteilhafterweise einen Anbaubock umfassen, der mit dem Anbaurahmen 10 verbunden ist, sowie ferner eine Dreipunktanlenkung mit Ober- und Unterlenkern aufweisen, die den genannten Anbaubock am Schlepper 2 anlenken.

Wie Fig. 1 zeigt, können dabei zwei Heckmerger 9 quer bzw. seitlich vom Schlepper 2 auskragend vorgesehen sein. Hierzu kann der Anbaurahmen 10 seitlich auskragende Tragarme 12 umfassen, die an einem Zentralabschnitt des Anbaurahmens 10 angelenkt sein und von diesem quer auskragen können. Vorteilhafterweise können die Tragarme 12 um liegende, näherungsweise in Fahrtrichtung weisende Tragarmschwenkachsen 13 schwenkbar am Anbaurahmen 10 angelenkt sein, so dass die Tragarme 12 auf und nieder wippen können, insbesondere zwischen einer abgesenkten Arbeitsstellung, die die Fig. 1 zeigt, und einer ausgehobenen Vorgewende- und/oder Transportstellung verschwenkt werden können.

Den Tragarmen 12 kann hierbei eine Gewichtsentlastungseinrichtung 14 zugeordnet sein, um die Heckmerger 9 leichtfüßig über den Boden führen zu können. Diese Gewichtsentlastungseinrichtung 14 kann beispielsweise eine Federeinrichtung umfassen oder einen Druckmittelzylinder aufweisen, der aus einem Druckspeicher heraus beaufschlagt sein kann.

Der Frontmerger 8 kann ebenfalls am frontseitigen Anbaurahmen 10 durch eine Gewichtsentlastungseinrichtung 14, die entsprechend ausgebildet sein kann, gewichtsentlastet aufgehängt sein. Der genannte frontseitige Anbaurahmen 10 kann in entsprechender Weise durch eine Anbauvorrichtung 11 anhebbar und absenkbar am Schlepper 2 anbaubar sein, wobei auch hier die Anbauvorrichtung 11 einen rahmenseitigen Anbaubock sowie eine Dreipunktanlenkung mit Ober- und Unterlenkern umfassen kann.

Wie die Figuren 3 und 5 zeigen, kann ein Tastfahrwerk zum Abtasten des Bodens und/oder Abstützen der Mergereinheit 3 am Boden seitlich neben dem Aufsammelförderer 4 angeordnete Tasträder 21 oder Tastkufen umfassen, vgl. Fig. 3, und/oder einen vom Boden des Schneckengehäuses 18 gebildeten Gleitteller aufweisen.

## Patentansprüche

1. Heuwerbungsmaschine in Form eines Mergers zum Schwaden und/oder Querversetzen von Erntegut, mit zumindest einer Mergereinheit (3), die einen Aufsammelförderer (4) zum Aufsammeln des Ernteguts vom Boden und einen Querförderer (5) zum Querfördern des aufgesammelten Ernteguts quer zur Fahrtrichtung (6) aufweist, wobei der Querförderer (5) als Schneckenförderer mit einer um eine liegende, quer zur Fahrtrichtung (6) ausgerichtete Schneckendrehachse (16) rotatorisch antreibbare Förderschnecke (15) ausgebildet ist, **dadurch gekennzeichnet, dass** eine Höheneinstellvorrichtung zum Höhenverstellen des Schneckenförderers relativ zum Aufsammelförderer (4) vorgesehen ist.

2. Heuwerbungsmaschine nach dem vorhergehenden Anspruch, wobei die Förderschnecke (15) von einem Schneckengehäuse (18) eingefasst ist, so dass zwischen Schneckengehäuse (18) und Förderschnecke (15) ein Förderraum (20) gebildet ist, wobei das genannte Schneckengehäuse (18) mit einem Bodenabschnitt bis an den Ablagebereich des Aufsammelförderers (4) herangeführt ist und/oder eine an den Aufsammelförderer (4) angeschlossene Sammelwanne bildet.

3. Heuwerbungsmaschine nach dem vorhergehenden Anspruch, wobei das Schneckengehäuse (18) ein Chassis bildet, an dem der Aufsammelförderer (4) gelagert ist und ein Aufhängungsteil zum Aufhängen der Mergereinheit (3) vorgesehen ist.

4. Heuwerbungsmaschine nach einem der vorhergehenden Ansprüche, wobei der Schneckenförderer dem Aufsammelförderer (4) unmittelbar ohne Zwischenschaltung von Übergabeförderern nachgeordnet ist.

5. Heuwerbungsmaschine nach einem der vorhergehenden Ansprüche, wobei der Schneckenförderer mit zumindest einer Oberseite der Förderschnecke (15) oberhalb des Aufsammelförderers (4) angeordnet ist.

6. Heuwerbungsmaschine nach dem vorhergehenden Anspruch, wobei die Schneckendrehachse (16) der Förderschnecke (15) über dem Ablagebereich (17) des Aufsammelförderers (4) angeordnet ist.

7. Heuwerbungsmaschine nach einem der vorhergehenden Ansprüche, wobei der Schneckenförderer eine Abwurfhöhe besitzt, die oberhalb des Ablegebereichs (17) des Aufsammelförderers (4) liegt.

8. Heuwerbungsmaschine nach einem der vorhergehenden Ansprüche, wobei die zumindest eine Mergereinheit (3) an einem Anbaurahmen (10) aufgehängt ist, der am Schlepper (2) anhebbar und absenkbar anbaubar ist, so dass die Mergereinheit (3) durch Anheben des Anbaurahmens (10) vom Boden aushebbar sind.

9. Heuwerbungsmaschine nach dem vorhergehenden Anspruch, wobei der Anbaurahmen (10) fahrwerkslos ausgebildet ist und/oder die Mergereinheit (3) nur mittels eines jeweiligen Tastfahrwerks am Boden abgestützt oder frei schwebend über dem Boden geführt sind.

10. Heuwerbungsmaschine nach einem der beiden vorhergehenden Ansprüche, wobei die zumindest eine Mergereinheit (3) jeweils um zumindest eine liegende Pendelachse pendelnd an dem Anbaurahmen (10) aufgehängt sind.

11. Heuwerbungsmaschine nach einem der vorhergehenden Ansprüche, wobei die zumindest eine Mergereinheit (3) an zumindest einem Tragarm (12) aufgehängt ist, der um eine liegende Tragarmschwenkachse (13) auf und nieder wippbar an einem Anbaurahmenabschnitt gelagert und durch eine Gewichtsentlastungseinrichtung (14) entgegen der Gewichtskraft der Mergereinheit (3) entlastet ist.

12. Heuwerbungsmaschine nach dem vorhergehenden Anspruch, wobei die Gewichtsentlastungseinrichtung (14) eine Federeinrichtung oder einen mit Druckmittel beaufschlagbaren Druckmittelaktor umfasst.

## Claims

1. Hay baler in the form of a merger for swathing and/or transversally displacing harvested material, having at least one merger unit (3), which comprises a collection conveyor (4) for collecting harvested material from the ground and a transversal conveyor (5) for transversally conveying the harvested material transversally to the direction of travel (6), wherein the transversal conveyor (5) is configured as a screw conveyor having a conveyor screw (15) rotationally drivable about a horizontal screw axis of rotation (16) oriented transversally to the direction of travel (6), **characterized in that** a height adjustment device is provided to adjust the height of the screw conveyor in relation to the collection conveyor (4).

2. Hay baler according to the preceding claim, wherein the conveyor screw (15) is enclosed by a screw housing (18), so that a conveyor space (20) is formed between screw housing (18) and conveyor screw (15), wherein the mentioned screw housing (18), with a bottom section, is guided all the way to the support area of the collection conveyor (4) and/or forms a collection tray connected to the collection conveyor (4).

3. Hay baler according to the preceding claim, wherein the screw housing (18) forms a chassis, on which the collection conveyor (4) is supported, and a mounting port is provided to mount the merger unit (3).

4. Hay baler according to one of the preceding claims, wherein the screw conveyor is arranged immediately downstream the collection conveyor (4) without interposing any handover conveyors.

5. Hay baler according to one of the preceding claims, wherein the screw conveyor, with at least an upper side of the conveyor screw (15), is arranged above the collection conveyor (4).

6. Hay baler according to the preceding claim, wherein the screw axis of rotation (16) of the conveyor screw (15) is arranged above the support area (17) of the collection conveyor (4).

7. Hay baler according to one of the preceding claims, wherein the screw conveyor has a dumping height which is situated above the support area (17) of the collection conveyor (4).

8. Hay baler according to one of the preceding claims, wherein the at least one merger unit (3) is mounted on an attachment frame (10), which can be attached to the tractor (2) in a manner to be liftable and lowerable, so that the merger unit (3) can be lifted off the ground by lifting the attachment frame (10).

9. Hay baler according to the preceding claim, wherein the attachment frame (10) is configured without undercarriage, and/or the merger unit (3) is supported on the ground only by means of a contact carriage, or is/are guided to be freely floating above the ground.

10. Hay baler according to one of the two preceding claims, wherein the at least one merger unit (3) is mounted on the attachment frame (10) in a manner to be swinging around at least one horizontal swing axis.

11. Hay baler according to one of the preceding claims, wherein the at least one merger unit (3) is mounted on at least one support arm (12), which is supported on an attachment frame section in a manner to seesaw up and down about a horizontal support arm pivot axis (13) and is relieved by a weight relief device (14) against the weight force of the merger unit (3).

12. Hay baler according to the preceding claim, wherein the weight relief device (14) includes a spring device, or a pressurizing medium actor pressurized with a pressurizing medium.

## Revendications

1. Faneuse sous forme d'un dispositif collecteur pour l'andainage et/ou le déplacement transversal de la récolte, comprenant au moins une unité de collecteur (3), qui comporte un transporteur ramasseur (4) destiné à ramasser la récolte du sol et un transporteur transversal (5) pour le transport transversal de la récolte ramassée, transversalement au sens de la marche (6), le transporteur transversal (5) étant réalisé sous la forme d'un transporteur à vis comprenant une vis convoyeuse (15) pouvant être entraînée en rotation autour d'un axe de rotation de vis sans fin (16) horizontal, orienté transversalement au sens de la marche (6), **caractérisé en ce qu'**un dispositif de réglage de la hauteur pour régler le transporteur à vis en hauteur par rapport au transporteur ramasseur (4) est prévu.

2. Faneuse selon la revendication précédente, dans laquelle la vis convoyeuse (15) est encadrée par un carter de vis (18), de telle sorte qu'entre le carter de vis (18) et la vis convoyeuse (15) un espace de transport (20) est formé, ledit carter de vis (18) allant avec une portion de fond jusqu'à la zone de dépôt du transporteur ramasseur (4) et/ou formant une cuve de collecte reliée au transporteur ramasseur (4).

3. Faneuse selon la revendication précédente, dans laquelle le carter de vis (18) forme un châssis sur lequel est monté le transporteur ramasseur (4) et sur lequel une partie de suspension est prévue pour la suspension de l'unité de collecteur (3).

4. Faneuse selon l'une quelconque des revendications précédentes, dans laquelle le transporteur à vis est disposé en aval du transporteur ramasseur (4) directement sans intercaler de transporteur de transfert.

5. Faneuse selon l'une quelconque des revendications précédentes, dans laquelle le transporteur à vis avec au moins une partie supérieure de la vis convoyeuse (15) est disposé au-dessus du transporteur ramasseur (4).

6. Faneuse selon la revendication précédente, dans laquelle l'axe de rotation (16) de la vis convoyeuse (15) est agencé au-dessus de la zone de dépôt (17) du transporteur ramasseur (4).

7. Faneuse selon l'une quelconque des revendications précédentes, dans laquelle le transporteur à vis sans fin possède une hauteur de déversement qui se situe au-dessus de la zone de dépôt (17) du transporteur ramasseur (4).

8. Faneuse selon l'une quelconque des revendications précédentes, dans laquelle l'au moins une unité de collecteur (3) est suspendue à un cadre de montage (10), qui peut être monté sur le tracteur (2) de manière levable et abaissable, de telle sorte que l'unité de collecteur (3) peut être soulevée du sol en levant le cadre de montage (10).

9. Faneuse selon la revendication précédente, dans laquelle le cadre de montage (10) est réalisé sans châssis et/ou l'unité de collecteur (3) est supportée au sol uniquement au moyen d'un châssis palpeur respectif ou est guidée en suspension libre au-dessus du sol.

10. Faneuse selon l'une des deux revendications précédentes, dans laquelle l'au moins une unité de collecteur (3) est suspendue au cadre de montage (10) de manière oscillante autour d'au moins un axe d'oscillation horizontal.

11. Faneuse selon l'une des revendications précédentes, dans laquelle l'au moins une unité de collecteur (3) est suspendue au moins sur un bras porteur (12) qui, monté sur une portion du cadre de montage, de manière à pouvant basculer vers le haut et vers le bas autour d'un axe horizontal de pivotement du bras porteur (13) et est déchargé par un dispositif de décharge du poids (14) contre la force antagonique de l'unité de collecteur (3).

12. Faneuse selon la revendication précédente, dans laquelle le dispositif de décharge du poids (14) comporte un dispositif à ressort ou un actionneur à fluide de pression pouvant être alimenté en fluide de pression.
